# EUROPÄISCHE PATENTSCHRIFT

(11) **EP 0 573 029 B1**
(45) Veröffentlichungstag und Bekanntmachung des Hinweises auf die Patenterteilung: **15.05.1996**
(21) Anmeldenummer: 93108918.9
(22) Anmeldetag: 03.06.1993
(51) Int. Cl.: C04B 35/047, C04B 35/10, C04B 35/12

(54) **Verwendung eines feuerfesten, oxidischen Mikropulvers zur Herstellung von keramischen Massen und Formteilen**
Use of refractory, oxide micropowder for making ceramic masses and bodies
Utilisation d'une poudre d'oxydes réfractaires, finement olivisée pour la préparation de masses céramiques et de corps moulés

(30) Priorität: 05.06.1992 DE 4218565; 05.11.1992 DE 4237317
(43) Veröffentlichungstag der Anmeldung: 08.12.1993
(73) Patentinhaber: VEITSCH-RADEX AKTIENGESELLSCHAFT FÜR FEUERFESTE ERZEUGNISSE, A-1040 Wien (AT)
(72) Erfinder: Heindl, Roland Dr. Dipl.-Ing., A-8700 Leoben (AT)
(74) Vertreter: Becker, Thomas, Dr., Dipl.-Ing.

(56) Entgegenhaltungen:
- EP-A- 0 354 896
- FR-A- 2 571 043
- US-A- 4 126 479

## Beschreibung

Die Erfindung betrifft die Verwendung eines feinteiligen Magnesiumoxid-Mikropulvers zur Herstellung von keramischen Massen und Formteilen.

Aus der AT 392 464 B ist ein Magnesiumoxid in Form eines feinen Pulvers und seine Verwendung zur Herstellung hochdichter Keramiken bekannt. Das feinteilige Magnesiumoxid weist eine Teilchengröße < 15 µm und eine spezifische Oberfläche < 20 m²/g (bestimmt nach BET aus der Stickstoffadsorptionsisotherme) auf. Es ist weiter durch einen Kornformfaktor der Primärteilchen zwischen 1 und 1,5 sowie eine Beschichtung aus einer hydrophobierenden Substanz gekennzeichnet Der genannte Kornformfaktor beschreibt im wesentlichen kugelförmige Teilchen, deren Dispergierungsgrad durch den genannten Zusatz einer hydrophobierenden Substanz erhöht wird.

Durch die Hydrophobierung werden zwar (unerwünschte) Agglomerate teilweise verhindert, letztendlich kommt es beim Brand jedoch zu einer Sammelkristallisation und damit zu einem Wachstum der feinteiligen MgO-Teilchen, das in einem unregelmäßigen Gefügeaufbau resultiert. Aus der Praxis ist weiter ein feinteiliges Magnesiumoxidpulver bekannt, das aus einer wässrigen Suspension durch Sprühtrocknen erhalten wird, wobei die Suspension ein Beschichtungsmittel erhält, das sich in möglichst monomolekularer Schicht auf der Oberfläche der Oxidteilchen niederschlagen soll. Das Beschichtungsmittel besteht dabei zum Beispiel aus einer Carbonsäure. Aufgrund der Aufbereitung in einer wässrigen Suspension läßt sich jedoch eine Hydratation des Magnesiumoxids zu Magnesiumhydroxid nicht vermeiden, wenngleich der Hydratationsgrad durch die Verwendung des Beschichtungsmittels und die anschließende Sprühtrocknung auf Werte unter 10 Gew.-% beschränkt werden kann. Die Hydratation hat jedoch eine Veränderung (Vergrößerung) der Teilchenform zur Folge, die unerwünscht ist. Als Richtwert kann angegeben werden, daß ein Hydratationsgrad von 1,0 Gew.-% das entsprechende Korn um 1,0 % linear vergrößert.

Es kommt hinzu, daß sich die bekannten feinteiligen Magnesiumoxidpulver nur zusammen mit Bindemitteln in einer grobkeramischen Matrix verarbeiten lassen.

Der Erfindung liegt die Aufgabe zugrunde, eine Möglichkeit aufzuzeigen, mit der sich feuerfeste keramische Massen und Formteile herstellen lassen, die auch ohne aufwendige Aufbereitung der Ausgangsbestandteile zu einer ausreichenden Grünstandsfestigkeit und hohen Dichte nach dem Brand führen.

Dabei liegt der Erfindung die Erkenntnis zugrunde, daß dies durch die Verwendung eines feinteiligen, feuerfesten, oxidischen Mikropulvers in einer grobkeramischen feuerfesten Matrix erreicht werden kann, wobei das Mikropulver weitestgehend in Form eines Einkorns vorliegt.

Es hat sich nämlich gezeigt, daß bei Verwendung eines derartigen Einkorns eine rein physikalische Bindung zwischen den Teilchen erreicht werden kann, die selbst im Grünzustand bereits zu einer ausreichenden und zum Teil gegenüber dem Stand der Technik erhöhten Grundfestigkeit führt. Durch die Verwendung eines Einkorns wird außerdem in vorteilhafter Weise eine Sammelkristallisation verhindert, bei der kleinere Teilchen bei der Sinterung mit größeren Teilchen koagulieren, wodurch eine unregelmäßige Sintercharakteristik entsteht.

Die Verwendung des feinteiligen oxidischen Mikropulvers mit weitestgehend einheitlichem Korndurchmesser führt dagegen bereits im Grünzustand zu einer physikalischen Haftung der Teilchen untereinander, die sich beim Brand in einer gleichmäßigen Sinterung fortsetzt. Die feinteilige Komponente füllt dabei in vorteilhafter Weise die Zwickel zwischen den gröberen Teilchen in Form einer dichtesten Kugelpackung aus und ermöglicht so am fertigen (gebrannten) Produkt eine deutlich verringerte Porosität.

Statistisch kann berechnet werden, daß beispielsweise bei einer Ausgangsporosität von 20 Vol.-% im Grobkorn-Matrixmaterial (mit einer maximalen Korngröße von 3 mm und einer minimalen Korngröße über der des Feinkornanteils) sowie Zugabe von 15 Gew.-% des feinteiligen Einkorn-Oxid-Pulvers mit einer Korngröße von etwas unter 1,0 µm eine Restporosität von 8 bis 10 Vol.-% am fertigen (gebrannten) Produkt gegeben ist.

Dies vorausgeschickt betrifft die Erfindung in ihrer allgemeinsten Ausführungsform die Verwendung eines nach Dispergierung in einem nicht wässrigen Dispergiermedium erhaltenen feinteiligen, feuerfesten, oxidischen Mikropulvers mit den Merkmalen des Anspruchs 1.

Das Mikropulver sollte dabei in einer Teilchengröße von weniger als 10 µm eingesetzt werden, wobei Teilchengrößen unter 1 µm besonders günstig im erfindungsgemäßen Sinne wirken.

Die Begriffe "Einkorn" beziehungsweise "weitestgehend einheitliche Korngröße" sind nicht in dem Sinne zu verstehen, daß ein exaktes Einkorn eingesetzt wird, weil dieses nur mit erhöhtem Aufwand überhaupt herstellbar, wenngleich besonders bevorzugt wäre; insoweit wird die Verwendung eines feinteiligen Mikropulvers vorgeschlagen, bei dem 90 Gew.-% der Teilchen ein maximale Abweichung vom mittleren Teilchendurchmesser von ± 10 % aufweisen.

Die verwendete Menge des Mikropulvers kann anwendungsspezifisch variieren, sollte aber grundsätzlich in der Größenordnung zwischen 5 und 18 Gew.-%, bezogen auf die Gesamtmasse, liegen, wobei ein Anteil von 10 bis 15 Gew.-% für die meisten Anwendungsbereiche infrage kommen dürfte.

Beim grobkeramischen Matrixmaterial kann auf konventionelle Siebkennlinien zurückgegriffen werden, die im Kornbereich < 5 mm und > als das Mikropulver vorliegen.

Wie bereits eingangs erläutert, besteht ein wesentlicher Vorteil der beschriebenen Verwendung darin, daß aus der Kombination von grobkeramischem Matrixmaterial und dispergiertem feinteiligen Mikropulver die Möglichkeit resultiert, bindemittelfrei zu arbeiten, da die feinteilige Einkorn-Komponente quasi als "in-situ-Bindemittel" wirkt.

Um den Dispergiereffekt der feinteiligen Komponente zu optimieren, wird der entsprechende Massenanteil zuvor in einem nicht wässrigen Dispergiermedium aufbereitet (wodurch bei hydratationsempfindlichen Oxiden wie MgO eine Hydratation verhindert wird), wobei das bezüglich des Feststoffs inerte Dispergiermedium zum Beispiel aus Naphtenbasischen Ölen oder Fettalkoholen bestehen kann und als Dispergiermittel zum Beispiel ein modifiziertes Alkydharz (Polyester) eingesetzt wird.

Das feuerfeste oxidische Mikropulver kann aus unterschiedlichen Oxiden bestehen, beispielsweise MgO, Al₂O₃, Cr₂O₃ und/oder TiO₂. Dabei kann das oxidische Mikropulver lediglich aus einem dieser Oxide bestehen; es ist aber auch möglich, Mischungen dieser Oxide als Mikropulver einzusetzen, insbesondere dann, wenn eine Spinellbildung gewünscht wird. In diesem Fall bietet es sich an, zum Beispiel eine MgO/Cr₂O₃-Dispersion zu verwenden.

Die erfindungsgemäße Verwendung erreicht ihre vorteilhaftesten Eigenschaften dann, wenn eine Dispersion mit einem sehr hohen Feststoffgehalt des oxidischen Mikropulvers eingesetzt wird. Hierunter werden Dispersionen verstanden, die einen Feststoffgehalt von über 85 Gew.-%, bezogen auf die Gesamt-Dispersion, aufweisen. Entsprechend beträgt der Anteil des Dispergierers dann bis zu 15 Gew.-%.

Überraschend wurde festgestellt, daß sich derartige hochkonzentrierte Dispersionen in hochenergiereichen Mischern unter Verwendung eines geeigneten Dispergiermittels (zum Beispiel Polyester) herstellen lassen, wobei der Feststoffanteil sogar auf Werte über 90 Gew.-% eingestellt werden kann.

Das grobkeramische Matrixmaterial wird in Abhängigkeit von den gewünschten Werkstoffeigenschaften ausgewählt.

So ist es für rein magnesitische Produkte möglich, ein magnesitisches, grobkeramisches Matrixmaterial mit einem MgO-Mikropulver aufzubereiten. Ebenso kann in diesem Fall das Mikropulver beispielsweise aber auch aus einer spinellbildenden MgO/Cr₂O₃- oder MgO/Al₂O₃-Dispersion bestehen.

Im Fall der Verwendung eines grobkeramischen Matrixmaterials auf Basis Al₂O₃ (zum Beispiel Tonerde, Tabulartonerde, Korund), bietet sich die Verwendung eines Al₂O₃-Mikropulvers an, das beispielsweise aber wieder ganz oder teilweise durch TiO₂ oder ein anderes feuerfestes oxidisches Mikropulver ersetzt werden kann.

Auch bei Verwendung von nicht hydratationsempfindlichen Oxiden wie Al₂O₃ sollte dieses vorzugsweise in einem nicht wässrigen Dispergiermedium aufbereitet werden, um den Wassergehalt der aufbereiteten Masse so gering wie möglich zu halten. Die Aufbereitungstechnik mit einem nicht wässrigen Dispergiermedium hat den Vorteil, daß sich die vorstehend genannten ungewöhnlich hohen Feststoff-Konzentrationen der Dispersion leichter erreichen lassen, mit der Folge, daß auf diese Weise nicht nur die Grünstandsfestigkeit der keramischen Masse (nach Vermischen mit dem grobkeramischen Matrixmaterial), sondern auch die Dichte nach dem Brand wesentlich gefördert werden kann.

So können unter Verwendung eines MgO-Mikropulvers in reinmagnesitischen Steinen nach dem Brand Dichten von 3,25 g/cm³ erreicht werden.

Es ist aber auch möglich, die feuerfeste oxidische Mikropulver-Dispersion vor der Vermischung mit dem grobkeramischen Matrixmaterial wieder von dem zur Aufbereitung verwendeten Dispergiermedium zu trennen, beispielsweise durch Sprühtrocknen oder Gefriertrocknen der Dispersion. Dabei wird das Dispergiermedium entfernt, beispielsweise abgesaugt, so daß sehr feines, reines und oberflächenmodifiziertes Mikropulver hergestellt wird. Dieses Mikropulver kann dann auch in wässrigen Systemen eingesetzt werden.

Versuche haben gezeigt, daß sich aus einer Masse, die 85 Gew.-% grobkeramisches MgO-Matrixmaterial in der Kornfraktion > 1,0 µm und < 3 mm sowie 15 Gew.-% eines zuvor dispergierten, feinteiligen MgO-Mikropulvers mit einer Korngröße von 0,9 µm enthält, Formkörper mit einer Kaltdruckfestigkeit des gepreßten Grünlings von 50 bis 60 N/mm² herstellen lassen, wobei dieser Wert um ein Vielfaches über den Werten der Kaltdruckfestigkeit liegt, die aus dem Stand der Technik bekannt sind.

Gleichzeitig werden Dichten erzielt, die oberhalb von 3,15 g/cm³ liegen (wobei diese Werte sowohl für die Grünlinge wie auch für den gebrannten Körper gelten).

Ein wesentlicher weiterer Vorteil besteht darin, daß die aus der beschriebenen Masse hergestellten Formteile im Brand keiner nennenswerten Schwindung unterliegen.

## Patentansprüche

1. Verwendung eines nach Dispergierung in einem nicht wässrigen Dispergiermittel erhaltenen feinteiligen, feuerfesten, oxidischen Mikropulvers, wobei 90 Gew.-% der Teilchen des Mikropulvers eine maximale Abweichung vom mittleren Teilchendurchmesser des Mikropulvers von ± 10 % aufweisen, in einem feuerfesten grobkeramischen Matrixmaterial zur Herstellung von keramischen Massen und Formteilen hoher Grünstandsfestigkeit und hoher Dichte nach einem Brand.

2. Verwendung nach Anspruch 1 mit der Maßgabe, daß das Mikropulver eine Teilchengröße von weniger als 10 µm aufweist.

3. Verwendung nach Anspruch 2 mit der Maßgabe, daß das Mikropulver eine Teilchengröße von weniger als 1 µm aufweist.

4. Verwendung nach einem der Ansprüche 1 bis 3 mit der Maßgabe, daß der Anteil des Mikropulvers an der Gesamtmischung 5 bis 18 Gew.-% beträgt.

5. Verwendung nach Anspruch 4 mit der Maßgabe, daß der Anteil des Mikropulvers an der Gesamtmischung 10 bis 15 Gew.-% beträgt.

6. Verwendung nach einem der Ansprüche 1 bis 5 mit der Maßgabe, daß das grobkeramische Matrixmaterial in einer Kornfraktion < 5 mm und > als das feinteilige Mikropulver vorliegt.

7. Verwendung nach einem der Ansprüche 1 bis 6 mit der Maßgabe, daß die Mischung aus Mikropulver und grobkeramischem Matrixmaterial bindemittelfrei ist.

8. Verwendung nach einem der Ansprüche 1 bis 7 mit der Maßgabe, daß das feinteilige Mikropulver in einem Dispergiermedium auf Basis Naphten-basischen Öls oder Fettalkohol aufbereitet wurde.

9. Verwendung nach einem der Ansprüche 1 bis 8 mit der Maßgabe, daß ein Mikropulver auf Basis MgO, Al₂O₃, Cr₂O₃ und/oder TiO₂ eingesetzt wird.

10. Verwendung nach Anspruch 9 mit der Maßgabe, daß als Mikropulver ein spinellbildendes Oxidgemisch eingesetzt wird.

11. Verwendung nach einem der Ansprüche 1 bis 10 mit der Maßgabe, daß als feuerfestes, grobkeramisches Matrixmaterial MgO, Al₂O₃ und/oder Cr₂O₃ eingesetzt wird.

12. Verwendung nach Anspruch 11 mit der Maßgabe, daß ein, mit dem Mikropulver spinellbildendes Oxid als feuerfestes, grobkeramisches Matrixmaterial eingesetzt wird.

13. Verwendung nach einem der Ansprüche 1 bis 12 mit der Maßgabe, daß eine Mikropulver-Dispersion mit einem Feststoffgehalt über 85 Gew.-%, eingesetzt wird.

14. Verwendung nach Anspruch 13 mit der Maßgabe, daß eine Mikropulver-Dispersion mit einem Feststoffgehalt über 90 Gew.-% eingesetzt wird.

15. Verwendung nach einem der Ansprüche 1 bis 14 mit der Maßgabe, daß die Mikropulver-Dispersion vor der Zugabe (Zumischung) zum grobkeramischen Matrixmaterial einer Behandlung zur Entfernung des Dispergiermediums unterworfen wird.

16. Verwendung nach Anspruch 15 mit der Maßgabe, daß die Mikropulver-Dispersion vor der Zugabe (Zumischung) zum grobkeramischen Matrixmaterial einer Sprühtrocknung oder Gefriertrocknung unterworfen wird.

## Claims

1. Use of a finely divided, refractory, oxidic micropowder, whereby 90 wt.% of the micropowder particles have a maximum deviation of ± 10% from the mean particle diameter of the micropowder and which was obtained after dispersion in a nonaqueous dispersing agent, in a refractory, coarse ceramic matrix material for preparing ceramic masses and moldings of high green bond and high density after firing.

2. Use in accordance with claim 1,
characterized in that the micropowder has a particle size of less than 10 µm.

3. Use in accordance with claim 2,
characterized in that the micropowder has a particle size of less than 1 µm.

4. Use in accordance with one of the claims 1 through 3, characterized in that the percentage of the micropowder in the total mixture is 5 wt.% to 18 wt.%.

5. Use in accordance with claim 4, characterized in that the percentage of the micropowder in the total mixture is 10 wt.% to 15 wt.%.

6. Use in accordance with one of the claims 1 through 5, characterized in that the coarse ceramic matrix material occurs in a particle fraction of < 5 mm and larger than the finely divided micropowder.

7. Use in accordance with one of the claims 1 through 6, characterized in that the mixture of micropowder and coarse ceramic matrix material is free of binder.

8. Use in accordance with one of the claims 1 through 7, characterized in that the finely divided micropowder has been prepared in a dispersing medium based on naphthene-basic oil or fatty alcohol.

9. Use in accordance with one of the claims 1 through 8, characterized in that a micropowder based on MgO, Al₂O₃, Cr₂O₃, and/or TiO₂ is used.

10. Use in accordance with claim 9, characterized in that a spinel-forming oxide mixture is used as the micropowder.

11. Use in accordance with one of the claims 1 through 10, characterized in that MgO, Al₂O₃, and/or Cr₂O₃ is used as the refractory, coarse ceramic matrix material.

12. Use in accordance with claim 11, characterized in that an oxide that forms a spinel with the micropowder is used as the refractory, coarse ceramic matrix material.

13. Use in accordance with one of the claims 1 through 12, characterized in that a micropowder dispersion with a solids content exceeding 85 wt.% is used.

14. Use in accordance with claim 13, characterized in that a micropowder dispersion with a solids content exceeding 90 wt.% is used.

15. Use in accordance with one of the claims 1 through 14, characterized in that the micropowder dispersion is subjected to a treatment for removing the dispersing medium before it is added to (mixed with) the coarse ceramic matrix material.

16. Use in accordance with claim 15, characterized in that the micropowder dispersion is subjected to spray drying or freeze drying before it is added to (mixed with) the coarse ceramic matrix material.

## Revendications

1. Utilisation d'une poudre d'oxydes réfractaires finement divisée, obtenue après dispersion dans un agent dispersant non aqueux, 90 % en poids des particules de la poudre s'écartant au maximum de ± 10 % du diamètre moyen des particules de la poudre, dans un matériau matriciel réfractaire en céramique grossière pour la préparation de masses céramiques et de corps moulés présentant un corps à vert élevé et une forte densité après cuisson.

2. Utilisation selon la revendication 1, caractérisée en ce que les particules contenues dans la poudre ont une dimension inférieure à 10 µm.

3. Utilisation selon la revendication 2, caractérisée en ce que les particules contenues dans la poudre ont une dimension inférieure à 1 µm.

4. Utilisation selon l'une quelconque des revendications 1 à 3, caractérisée en ce que la poudre représente 5 à 18 % en poids de l'ensemble du mélange.

5. Utilisation selon la revendication 4, caractérisée en ce que la poudre représente 10 à 15 % en poids de l'ensemble du mélange.

6. Utilisation selon l'une quelconque des revendications 1 à 5, caractérisée en ce que le matériau matriciel en céramique grossière présente une granulométrie inférieure à 5 mm et supérieure à celle de la poudre finement divisée.

7. Utilisation selon l'une quelconque des revendications 1 à 6, caractérisée en ce que le mélange formé de la poudre et du matériau matriciel en céramique grossière ne comprend pas de liant.

8. Utilisation selon l'une quelconque des revendications 1 à 7, caractérisée en ce que la poudre finement divisée a été préparée dans un milieu dispersant à la base d'huile naphtènique basique ou d'alcool gras.

9. Utilisation selon l'une quelconque des revendications 1 à 8, caractérisée en ce que l'on utilise une poudre à base de MgO, Al₂O₃, Cr₂O₃ et/ou TiO₂.

10. Utilisation selon la revendication 9, caractérisée en ce que la poudre utilisée est un mélange d'oxydes formant des spinelles.

11. Utilisation selon l'une quelconque des revendications 1 à 10, caractérisée en ce que le matériau matriciel réfractaire en céramique grossière comprend MgO, Al₂O₃ et/ou Cr₂O₃.

12. Utilisation selon la revendication 11, caractérisée en ce que le matériau matriciel réfractaire en céramique grossière utilisé est un oxyde formant des spinelles avec la poudre.

13. Utilisation selon l'une quelconque des revendications 1 à 12, caractérisée en ce que l'on utilise une dispersion de poudre dont la teneur en particules solides est supérieure à 85 % en poids.

14. Utilisation selon la revendication 13, caractérisée en ce que l'on utilise une dispersion de poudre dont la teneur en particules solides est supérieure à 90 % en poids.

15. Utilisation selon l'une quelconque des revendications 1 à 14, caractérisée en ce que la dispersion de poudre est soumise à un traitement destiné à éliminer le milieu de dispersion, avant d'être ajoutée et mélangée au matériau matriciel en céramique grossière.

16. Utilisation selon la revendication 15, caractérisée en ce que la dispersion de poudre est soumise à un traitement de séchage par pulvérisation ou de lyophilisation, avant d'être ajoutée et mélangée au matériau matriciel en céramique grossière.
